# EUROPEAN PATENT APPLICATION

(11) **EP 1 174 481 A2**
(43) Date of publication of application: **23.01.2002**
(21) Application number: 01306118.9
(22) Date of filing: 17.07.2001
(51) Int. Cl.: C09J 163/00

(54) **One-part, heat-cured epoxy adhesive**

(30) Priority: 18.07.2000 US 618362
(71) Applicant: ILLINOIS TOOL WORKS INC., Glenview, Illinois 60025 (US)
(72) Inventor: Morgan, Noredin, Billerica, Massachusetts 01821 (US); Doe, Daniel K., Jamaica, Massachusetts 02130 (US)
(74) Representative: Perry, Robert Edward

(57) **Abstract**

A novel single component heat-activated structural adhesive system cures at 93-149°C in 30-60 seconds and achieves 70-90% of final cure, providing sufficient bond strength for handling sheet molding compounds (SMC) or bulk molding compounds (BMC).

The composition comprises:
(a) 40 to 60% w/w of an epoxy resin;
(b) 5 to 20% w/w of a curing agent which is substantially non-reactive below 65.5°C;
(c) 2 to 20% w/w of a cross-linking agent;
(d) 5 to 25% w/w of an impact-modifying agent;
(e) a catalytic amount of a catalyst; and
(f) filler in an amount sufficient to bring the total weight percent to 100.

## Description

### Field of the Invention

This invention relates to an adhesive composition especially designed for bonding sheet molding compounds used in the automotive industry.

### Background of the Invention

BMC and SMC are terms used in the art to describe fiber-reinforced thermoset polyester molding materials. SMC is a sheet compound usually reinforced with glass fiber. BMC is a bulk material reinforced with fiber strands. Automotive parts are usually molded from SMC by hot pressing and from BMC by hot-pressing or injection-molding.

The use of sheet molding compounds (SMC) in the automotive industry has increased dramatically in the past few years. SMC components such as hoods, spoilers and deck lids are of lighter weight and cost less to produce than their metal counterparts. Currently, many SMC parts are made in two pieces which are bonded using two-component epoxy or polyurethane adhesives.

Assembly of automotive SMC or BMC parts requires adhesives having special properties. Preferably, the adhesive can bond well to surfaces which have not been pretreated. Some known adhesives require a methylene chloride wipe to prepare the SMC surfaces for application of the adhesive. However, environmental concerns are discouraging assemblers from the use of organic solvents.

The adhesive must also have resistance to sag and especially so when the adhesive is applied rapidly by robots. This rapid application creates high shear rates which cause an adhesive to decrease in viscosity. However, when the shear is removed, the viscosity must recover almost instantaneously to prevent sagging. Most adhesives used to bond SMC and BMC are two-part adhesives which must be mixed immediately prior to use. See, for example, US-A-4,803,232.

Due to the speed of automotive assembly operations, the adhesive must be able to build up strength rapidly. Green strength is defined as that point at which a bonded assembly is capable of being handled without movement of the bonded parts at the adhesive joint and retains the ability to cut off any excess of partially cured adhesive which may have squeezed out of the joints. A typical requirement is that the time to build green strength must be within 60 seconds at the cure temperature.

The adhesive must have sufficient heat resistance to withstand paint and ELPO cycles. In addition, as engine compartments become more compact, more heat will be generated under the hood. Bonded parts will need even more thermal resistance. Present technology provides for a lap shear strength of only 200 psi (1.38 MPa) at 180°F (82°C).

In addition to the above mentioned processing requirements and thermal requirements, the adhesive must also comply with automotive specifications regarding impacts, environmental exposure and cleavage.

### Summary of the Invention

By a new combination of ingredients, the present invention provides a one-part epoxy adhesive capable of bonding automotive SMC and BMC joints rapidly. The adhesive of the present invention also meets all present automotive specifications for such materials. Also, it provides excellent high temperature resistance along with excellent impact resistance. The adhesive also requires higher total energy to cleave an SMC plaque than the industry standard as tested by SAE test J1882. Several advantages over the prior art two-component adhesive systems are obtained by the use of the single component adhesive composition of the present invention, including low waste, long operating times, elimination of mixture errors, and increased productivity.

A single component epoxy system of the present invention comprises (all percentages being by weight):
(1) 40 to 60, preferably 45 to 55, and most preferably about 50, % of an epoxy resin (which may comprise one or more epoxy resins);
(2) 5 to 20, preferably 9 to 11, and most preferably about 10, % of a curing agent (which may comprise one or more curing agents);
(3) 2 to 20, preferably 4 to 16, and most preferably 10 to 12, % of a cross-linking agent (which may comprise one or more cross-linking agents) ;
(4) 5 to 25, preferably 10 to 20, and most preferably 14 to 17, % of an impact-modifying agent (which may comprise one or more impact modifying agents);
(5) a catalytic amount, e.g., 0.05 to 0.2, preferably about 0.1, % of a catalyst (which may comprise one or more catalysts); and
(6) a filler (which may comprise one or more fillers) to bring the total to 100%.

As described above, the present invention is directed to a single-component, sag-resistant, heat-curable, reactive epoxy adhesive whose primary purpose is to adhere parts produced from SMC and BMC in the automotive industry. The adhesive must cure quickly to meet the rigorous demands of the automotive industry. As used herein, the term "quick curing" means that the adhesive will bond within 30 to 60 seconds at a temperature in the range of 250-300°F (93-149°C). After being removed from the bonding fixture the adhesive must have enough strength to withstand handling through a power wash, painting and paint bake cycle, which is usually for 20 to 30 minutes at about 300-350°F (149-177°C).

The novel single-component epoxy adhesive system has a shelf life of from four to six months (or more) at room temperature (about 24°F). The use of this single component epoxy adhesive provides the following advantages over the prior art two-component systems: reduced waste; greater efficiently in the process; increased assembly productivity; no mixing step; flexible, open application time; bond strength at least as high as that required of SMC components; and excellent thermal and dimensional stability.

### Description of the Invention

The present invention is directed to a single component heat activated, epoxy based structural adhesive system. The preferred adhesive system of this invention cures at a temperature of 250-300°F (93-149°C) in from 30 to 60 seconds, and achieves from about 80% to 90% of full cure in that time frame, thereby providing sufficient bond strength for mechanical handling of bonded sheet molding compounds (SMC) and/or bulk molding compound (BMC).

The adhesive system of the present invention also provides dimensional stability without sagging, running, and read-through. The green strength obtained from the SMC curing cycle provides about 20% to 60% of desired fiber tear strength, which has been found to be sufficient to complete the paint bake step, in which the bonded SMC parts are typically subjected to 300-350°F (149-177°C) for 20 to 30 minutes. During this bake cycle, the adhesive curing is completed.

There are a host of commercially available epoxides which can be used in this invention. In particular, epoxides which are readily available include diglycidyl ethers of bisphenol A, including those commercially available under the trade designations "Epon 828" or "DPL 862" from Shell Chemical Co., and "DER-33 1", "DER-332", and DER "334" from Dow Chemical Co., to name but a few.

Epoxy resins having a wide range of molecular weights and other characteristics are adaptable for use in accordance with the present invention. It is generally preferred, however, that the epoxy resins of the present invention possess an epoxy equivalent weight (EEW) of from about 180 to about 192. Furthermore, it is generally preferred that the epoxy resins have a viscosity of from about 11,000 to about 14,000 cps at about 25°C.

Preferred epoxy resins for use in the invention contain the oxirane ring molecular structure. Especially preferred are glycidyl ether derivatives having an oxirane ring polymerizable by ring opening. Such materials, broadly called glycidyl ether epoxides, include monomeric epoxy compounds and epoxides of the polymeric type. Preferably these epoxides have more than one epoxide group per molecule.

The preferred epoxide group-containing materials can vary from low molecular weight monomeric materials to high molecular weight polymers and can vary in the nature of their backbone and substituent groups. Illustrative substituent groups include halogens, ethers, and siloxane groups. The molecular weight of the epoxy containing compound can vary from 150 to about 100,000 or more. Mixtures of various epoxy-containing materials can also be used in the composition of this invention.

Such epoxide group-containing materials are well known and include such epoxides as glycidyl ether type epoxy resins and the diglycidyl ethers of bisphenol A (DGEBPA) or bisphenol F (DGEBPF) and their higher molecular weight analogs. One preferred commercial example is Epon 828 available from Shell Chemical Company.

In addition to the epoxy resins, one or more curing agents for the epoxy resin are required. As used herein, the term "curing agent" refers to one or more components which are capable of catalyzing and/or accelerating the cross-linking reaction of the epoxy component. The relative proportion of epoxy resin to curing agent may vary widely within the scope hereof, in order to accommodate the needs and requirements of the particular composition. These modifications are within the ordinary skill of the artisan in this field.

It is preferred that the curing agents of the present comprise aliphatic amines, anhydrides, polyamides, phenol/urea/melarnine formaldehydes, Lewis acid catalysts, and combinations of two or more of these. The curing agent of the present invention may include at least one latent intermediate temperature curing agent and/or one latent high temperature curing agent. Advantageously, the curing agent includes a combination of one or more of these agents.

Latent intermediate temperature curing agents are compounds or compositions which remain generally unreactive up to 100-150°F (38-65.5°C) but which become reactive at above about 150°F (65.5°C). Latent high temperature curing agents are compounds or compositions which remain relatively inert up to temperatures of about 300°F (149°C) but at temperatures above about 300°F (149°C) are capable of rapidly catalyzing the cross-linking of the epoxy component.

Preferred curing agents comprise either a latent intermediate, or a solid phase (e.g. powder), or a high temperature curing agent, and most preferably combinations of these agents.

The most preferred curing agent comprises a combination of latent high temperature and latent intermediate temperature curing agents, with the weight ratio of the latent high temperature to latent intermediate agent preferably being from about 1:1 to about 4:1.

A preferred latent high temperature curing agent is dicyandiamide (DICY). DICY is a preferred latent high temperature curing agent because it is inexpensive, exhibits excellent latency at temperatures below 300°F (149°C) and exceptional catalytic activity at higher temperatures to provide excellent final cure properties. DICY is abundantly commercially available, and a preferred source is available under the tradename Amicure CG-1200 sold by Air Products and Chemicals. Other known latent high temperature curing agents such as diaminodiphenyl-sulfone or DICY analogues might also be used.

A preferred latent intermediate temperature curing agent comprises modified aliphatic amines. Two such products are sold under the tradenames Ancamine 2441 and Ancamine 2337S, each sold by Air Products and Chemicals.

Cross-linking agents are widely available. Especially preferred cross-linking agents or extenders comprise carboxylic diacid hydrazides with a molecular weight of about 180. Commercial examples include adipic dihydrazide (ADH), available from Ajinomoto, isophthalic dihydrazide (IDH) and sebasic acid dihydrazide (SDH), to name but a few.

Likewise, impact-modifying agents are widely available. The preferred impact-modifying agent or toughener advantageously includes two types:
Type A - a high molecular weight epoxy adduct with 40% carboxy-terminated butadiene. A commercial example is carboxy-terminated butadiene acrylonitrile (CTBN) rubber, available from B.F. Goodrich Chemical Co.; and
Type B - a methylacrylate-butadiene-styrene (MBS) copolymer, which provides impact strength at ambient and low temperatures. A commercial example is KMBTA-753, available from Rohm & Haas.

More generally, the following applies:
Type A - high molecular weight carboxylic acid or anhydride containing oligomers or polymers, which include oligomeric or polymeric materials having in their molecular structures at least one carboxylic acid or anhydride group. Examples of the oligomers and polymers that can be used include polybutadiene, copolymers of butadiene and acrylonitrile, styrene maleic anhydride copolymers and various olefin maleic anhydride copolymers. Examples of commercially available materials that can be used include: the carboxyl-terminated butadiene acrylonitrile liquid copolymers supplied by BP Goodrich under the tradename Hycar, specific examples including Hycar 1300X8, Hycar 1300X9, Hycar 1300X13, Hycar 1300X18, and Hycar 1300X31; and the polybutadiene polymers adducted with maleic anhydride supplied by Ricon Resins under the trade designations Ricon 131/MA-5, Ricon 131/MA-10, Ricon 131/MA-12 and Ricon 131/MA-17. An example of a commercially available carboxyl-terminated polybutadiene is Hycar 2000X 162 supplied by BF Goodrich. Especially preferred is a high molecular weight epoxy adduct with 30-40% carboxy-terminated butadiene acrylonitrile (CTBN) rubber; and
Type B - a methylacrylate-butadiene-styrene (MBS) copolymer, which provides impact strength at ambient and low temperatures. Examples of these materials are well known in the art. See for example the listing thereof in US-A-4,959,405, at Table III. One especially preferred commercial example of this type of impact modifier is KMBTA-753, available from Rohm & Haas.

Catalysts are likewise widely available in this art. An especially preferred catalyst is a high reactivity, low melting point catalyst, which is used to accelerate the reaction at a temperature below about 250°F (93°C), without affecting shelf life. One commercial example is Curezol (2-MZ) available from Air Products and Chemicals.

The curable adhesive compositions of this invention may also contain other additives such as fillers, pigments, diluents and dyes. Each may be added to provide desired properties.

Fillers are non-reactive solids added in adjust rheology. Suitable fillers for use in the compositions of this invention are mineral fillers. Illustrative examples include talc, mica, titanium dioxide, lithopone, zinc oxide, zirconium, silica, silica aerogel, iron dioxide, diatomaceous earth, calcium carbonate, fumed silica, silazane treated silica, precipitated silica, glass fibers, magnesium oxide, chromic oxide, zirconium oxide, aluminum oxide, crushed quartz, calcined clay, asbestos, carbon, graphite, cork, cotton and synthetic fibers, to name but a few. A particularly preferred filler is a fumed silica which also acts as a thixotropic agent and/or a compatibalizer, such as is sold under the trade name Cab-O-Sil TS-720 by Cabot Corporation.

The preferred amount of filler will generally depend upon the particular type of adhesive being used, as indicated hereinafter. Generally, the other additives such as dyes, diluents, pigments, thixotropic agents and the like will be added in conventional amounts.

As described above, the adhesive of the present invention is formulated in a one-part storage-stable system. As used herein, the term storage-stable generally refers to systems which are substantially stable at temperatures of about 25°C (77°F), and preferably up to 65.5°C (150°F). In other words, the adhesive composition of the present invention will remain stable under normal storage and application conditions, and will not react until the appropriate environmental conditions are applied. In the present invention, this means that one or more heating steps are required to activate and cure the adhesive composition.

Advantageously, the bonding processes for SMC and BMC generally comprise the use of heated fixtures to cure the adhesives used therein. One method of manufacturing SMC components for the automotive industry uses hot air at 600 -700°F (315-370°C), to heat the bond line. Another method of manufacturing SMC components uses resistive heating to bond the parts. The bonding cycle for the hot air process is typically from 45 to 75 seconds, while the typical resistive heating process cycle time ranges from 120 to 180 seconds. After bonding, the SMC or BMC components are typically transferred to a painting operation. Part of this painting operation is an oven cycle to bake the paint. Typically the oven is held at 300-350°F for 30 to 45 minutes. Final cure of the adhesive occurs during this bake cycle.

### EXAMPLES

The present invention will be further illustrated with reference to the following examples which aid in the understanding of the present invention, but which are not to be construed as limitations thereof. All percentages reported herein, unless otherwise specified, are percent by weight. All temperatures are expressed in degrees Celsius.

Table 1 provides specific examples of adhesive formulations of the present invention. The amounts listed are weight percent values:

**Table 1:**

| **Examples of One Part Heat Cured** **Epoxy Adhesive Compositions:** | | | | |
|---|---|---|---|---|
| **Raw Material** | **PC1-10-1** | **VM3-1-1** | **VM3-1-2** | **DD3-62-1** |
| EPON 828 | 51.94 | 48.42 | 45.25 | 48.89 |
| KMBTA-753 | 3.64 | 3.39 | 3.17 | 3.42 |
| CTBN-58003 | 12.99 | 12.11 | 11.31 | 12.24 |
| TS-720 | 1.04 | 0.97 | 0.90 | 0.99 |
| Talc 399 | 15.74 | 14.67 | 13.71 | 13.81 |
| BGE | - | - | - | 5.4 |
| Ancamine 2441 | 10.39 | 9.69 | 9.05 | 9.79 |
| ADH | 4.16 | 10.65 | 16.52 | 10.76 |
| Curezol 2-MZ | 0.10 | 0.10 | 0.09 | 0.10 |
| Total | 100.00 | 100.00 | 100.00 | 100.00 |

Testing was performed on the adhesive compositions of the present invention, to understand the cure characteristics and mechanical strengths. Differential Scanning Calorimetry (DSC) was used to determine the degree of cure of the adhesive based upon the heat applied to the adhesive. SMC is a thermosetting resin reinforced with glass fibers. When the adhesive bonds very well to the substrate and samples are pulled apart, the substrate delaminates. This is called fiber tear, or substrate failure. When the adhesive does not bond well the adhesive delaminates cleanly from the surface of the SMC. This is called adhesive failure (debonding). Through the DSC studies, a correlation was found: the higher the degree of cure, the more likely the failure mode of the tested coupons would be fiber tear.

Table 2 discloses the current most preferred adhesive composition of the present invention:

**Table 2**

| **Component Tradename** | **wt.%** | **Weight in pounds (kg)** |
|---|---|---|
| Epodil 741 | 4.87 | 3.90 (1.77) |
| Epon 828 (Araldite 6010) (V-18) | 46.36 | 37.10 16.83) |
| RME-30 | 8.18 | 6.54 (2.97) |
| USA KMBTA-753 | 3.41 | 2.73 (1.24) |
| Talc #399 (Magnesium Silicate) | 14.78 | 11.82 (5.36) |
| Adipic Dihydrazide (ADH) | 10.72 | 8.58 (3.89) |
| Curezol 2-MZ | 0.10 | 0.08 (0.04) |
| Ancamine 2441 | 9.76 | 7.81 (3.54) |
| Cab-O-Sil TS-720 | 1.82 | 1.46 (0.66) |

A Ross fixed blade mixer was charged with the epoxy resin (EPON or ARALDITE). Granular RME-30 was added to the epoxy resin and the mixture was heated to 75-85°C. KMBTA-753 was slowly added to the heated mixture. Epodil 741 (n-butyl glycidyl ether) was added and the mixture was stirred for 4-6 hours until homogeneous. The temperature was reduced to 25-30°C and the talc was added. The mixture was stirred at high speed for 30 minutes, and then stirred at a reduced speed with continued cooling (25-30°C) for another 30 minutes. Stirring continued until the mixture was lump-free, maintaining the temperature below 35°C. Adipic dihydrazide was next added and the mixture was stirred for 10 minutes until completely mixed, maintaining the temperature below 35°C. Next added was Ancamine-2441. Cooling was required to hold the temperature of the mixture below 40°C, preferably below 35°C. Once the Ancamine-2441 was completely mixed in, the Curezol 2-MZ was added and the mixture was stirred with degassing under maximum vacuum for at least 10 minutes. Finally, the Cab-O-Sil TS-720 was added, followed by complete mixing and degassing under vacuum for 30 minutes. The mixture was stirred sufficiently to ensure the absence of lumps and/or undispersed particles. If any lumps or undispersed particles were observed, mixing was continued with vacuum under highest speed without increasing the temperature of the mixture above about 35°C.

The preferred SMC adhesive had the following physical properties measured at 25°C (± 1°C):
Viscosity (cP) 2,000,000 to 3,000,000;
Density 1.2 to 1.22 gm/cc;
Sag Test - ½ inch (12.7 mm) bead on tongue depressor-no movement for 30 mm; no movement at 100-105°F (38-40.5°C) for 5 minutes;
Bond strength - 450 psi (310 MPa); fiber tear, bond failure required based on 4-5 samples using 1" x 1" (25.4 mm x 25.4 mm) overlap @ 0.030" bond line. Pull bonds @ 0.5"/minute after cure;
Exotherm time (DSC) 20°C/minute from 25-150°C.

## Claims

1. A one-part epoxy adhesive composition capable of bonding automotive SMC and BMC materials and which at least partially cures at 93-149°C over 30-180 seconds, which comprises:
(a) 40 to 60% w/w of an epoxy resin;
(b) 5 to 20% w/w of a curing agent which is substantially non-reactive below 65.5°C;
(c) 2 to 20% w/w of a cross-linking agent;
(d) 5 to 25% w/w of an impact-modifying agent;
(e) a catalytic amount of a catalyst; and
(f) filler in an amount sufficient to bring the total weight percent to 100.

2. The composition of claim 1, which comprises 45 to 55, e.g. 50, % w/w of the epoxy resin.

3. The composition of claim 1 or claim 2, wherein the epoxy resin comprises a glycidyl ether epoxide or a diglycidyl ether of bisphenol A.

4. The composition of any preceding claim, which comprises 9 to 11, e.g. 10, % w/w of the curing agent.

5. The composition of any preceding claim, wherein the curing agent is selected from latent intermediate curing agents, high temperature curing agents, and mixtures thereof, e.g. dicyandiamine or a blocked aliphatic amine.

6. The composition of any preceding claim, which comprises 4 to 16, e.g. 10 to 12, % w/w of the cross-linking agent.

7. The composition of any preceding claim, wherein the cross-linking agent comprises a carboxylic diacid dihydrazides, e.g. having a molecular weight of about 180, e.g. selected from adipic dihydrazide, isophthalic dihydrazide and sebacic dihydrazide.

8. The composition of any preceding claim, which comprises 14 to 17 % w/w of the impact-modifying agent.

9. The composition of any preceding claim, wherein the impact-modifying agent is selected from high molecular weight epoxy adducts with 40% carboxy-terminated butadiene, methacrylate-butadiene-styrene copolymers, and mixtures thereof.

10. The composition of any preceding claim, which comprises 0.05 to 0.2, e.g. about 0.1, % w/w of the catalyst.

11. The composition of any preceding claim, which comprises 1 to 50, preferably 10 to 20, e.g. about 15, % w/w of the filler.

12. The composition of any preceding claim, wherein the filler is selected from talc, mica, titanium dioxide, lithopone, zinc oxide, zirconia, silica, silica aerogel, iron dioxide, diatomaceous earth, calcium carbonate, fumed silica, silazane-treated silica, precipitated silica, glass fibers, magnesium oxide, chromic oxide, zirconium oxide, aluminum oxide, crushed quartz, calcined clay, asbestos, carbon, graphite, cork, cotton and synthetic fibers, preferably talc or fumed silica.
